(19) **Europäisches Patentamt / European Patent Office / Office européen des brevets**

(11) **EP 1 628 087 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(51) Int Cl.:
*F24F 11/02* *(2006.01)* *F24F 13/02* *(2006.01)*
*F24F 13/08* *(2006.01)*

(21) Anmeldenummer: **04019536.4**

(22) Anmeldetag: **18.08.2004**

(54) **Verfahren und Einrichtung zum Ermitteln einer Dichtheit eines Raums**

Method and apparatus for establishing a room impermeability

Procédé et dispositif permettant d'établir l'étanchéité d'une pièce

(84) Benannte Vertragsstaaten:
**AT CH DE FR IT LI**

(43) Veröffentlichungstag der Anmeldung:
**22.02.2006 Patentblatt 2006/08**

(73) Patentinhaber: **Zehnder Verkaufs- und Verwaltungs AG**
**5722 Gränichen (CH)**

(72) Erfinder: **Kriesi, Rudolf Dr.**
**8820 Wädenswil (DE)**

(74) Vertreter: **Stenger, Watzke & Ring**
**Kaiser-Friedrich-Ring 70**
**40547 Düsseldorf (DE)**

(56) Entgegenhaltungen:
**US-A- 5 024 263        US-A- 5 538 471**
**US-A- 5 720 658        US-A- 5 791 408**
**US-A- 5 984 773        US-B1- 6 415 617**

**Beschreibung**

Die vorliegende Erfindung betrifft ein Verfahren zum Ermitteln einer Dichtheit eines Raumes, insbesondere eines Gebäudes oder Teilen hiervon, mit einer lüftungstechnischen Einrichtung, wobei mittels einem Ventilator über einen Zuluftkanal dem Raum Zuluft zugeführt und Abluft über einen Abluftkanal aus dem Raum abgeleitet wird.

Luftaustausch ermöglichende Leckagen an einem Gebäude führen zu einem Luftaustausch, welcher vom Temperaturauftrieb, Wind- und Wetterverhältnissen oder dergleichen abhängig ist und nicht kontrolliert werden kann. Fugen und Undichtigkeiten in einer Gebäudehülle können Schäden durch Feuchtigkeit und Schimmel verursachen. Gebäude im Sinne der vorliegenden Erfindung sind nicht nur technische Gebäude, Bürogebäude oder ähnliches, sondern insbesondere auch Wohngebäude, einzelne Wohnungen oder dergleichen.

Um beispielsweise bei Gebäuden Bauschäden und/oder Schimmel vermeiden zu können, ist es erwünscht, das Gebäude möglichst luftdicht und wärmebrückenfrei auszubilden. Ferner soll der Verbrauch an Heizenergie gering gehalten werden. Bei richtiger Heizung und regelmäßiger und kontrollierter Lüftung kann der Energieverbrauch gering gehalten werden, wobei zugleich Bauschäden, Schimmelpilz oder dergleichen reduziert werden können. Um die Dichtheit eines Gebäudes prüfen zu können, ist es üblich Luftdichtheitsmessungen am Gebäude oder Teilen hiervon durchzuführen.

Darüber hinaus soll durch eine gute Wärmedämmung ein geringer Energieverbrauch während der Heizperiode erreicht werden. Bei wärmetechnisch gut isolierten Gebäuden ist der Anteil an Lüftungswärmeverlust gegenüber Transmissionsverlust durch die isolierte Gebäudewand etwa gleich groß. Die Ursachen für den Lüftungswärmeverlust sind thermischer Auftrieb und äußerer Winddruck. Warme Luft steigt aufgrund des thermischen Auftriebs nach oben und entweicht durch Fugen und Ritzen. Der Winddruck wirkt dagegen auf die Fugen und drückt auf der Luvseite kalte Luft durch die Fuge hinein, wogegen auf der Leeseite warme Luft herausgesaugt wird. Diese Effekte führen zu einer Erhöhung des Wärmebedarfs.

Aber auch der Wohnkomfort ist hiervon betroffen, da durch die Leckagen unerwünschte Gerüche aus der Umgebung und aus Nachbargebäuden in das Gebäude eindringen. Besonders unerwünscht ist, wenn mit diesem Luftaustausch Fremdstoffe oder sogar luftbelastende Stoffe in das Gebäude eingetragen werden. Solche Stoffe können beispielsweise Staub, Dämmfasern, gesundheitsschädliche Stoffe, Pilzsporen, Pollen und dergleichen sein.

Die Dichtheit des Raums hat auch Auswirkungen auf eine Schalldämmung, da dieser sich durch Fugen und Ritzen direkt und ungedämpft ausbreiten kann.

Undichte Stellen können darüber hinaus dazu führen, daß durch Zustrom kalter Luft Böden ausgekühlt werden und so den Wohnkomfort mindern.

Um die Dichtheit eines Raums bestimmen zu können, sind aus der Normung bereits Meßverfahren bekannt, so z. B. aus der DIN EN 13829. Für Messungen gemäß diesem Verfahren wird in einer Öffnung des Raumes, beispielsweise einer Tür oder einem Fenster ein Ventilator mit seinem Gehäuse luftdicht eingesetzt. Nachdem alle weiteren Öffnungen des Raums geschlossen sind, wird mittels einer Drehzahlregelung für den Ventilator einmal ein Unterdruck und ein anderes Mal ein Überdruck von jeweils 50 Pa erzeugt. Durch die undichten Stellen strömt Luft von außen nach bzw. nach außen hinaus. Diese Luftverluste werden durch den Ventilator bei stationären Druckverhältnissen nachgeliefert. Die einströmende bzw. ausströmende Luftmenge ist der Leckagestrom, welcher die Grundlage für die Ermittlung der Dichtheit des Raums darstellt.

Im Rahmen einer Mehrpunktmessung kann der stationär einzustellende Unter- bzw. Überdruck im Bereich von 10 bis 60 Pa liegen.

Die angestrebte gute Dichtheit des Gebäudes erfordert regelmäßiges Lüften zur Gewährleistung von ausreichender Versorgung mit Frischluft für Personen in innerhalb des Gebäudes und zur Abfuhr verbrauchter Luft, Gerüchen und/oder Feuchtigkeit. Um regelmäßiges Lüften zu gewährleisten, werden bei Gebäuden mit hohen Werten für die Dichtigkeit zunehmend Geräte zur Erneuerung der Raumluft vorgesehen. Diese Geräte führen dem Gebäude oder Teilen hiervon Frischluft zu und saugen eine etwa vergleichbare Menge verbrauchter Luft ab. Solche Geräte erzeugen Luftströmungen von 200 bis 500 m$^3$/h und werden als Komfortlüftung oder als kontrollierte oder mechanische Wohnungslüftung bezeichnet.

Die US 5,984,773 beschreibt eine Vorrichtung zur Regulierung eines Drucks in einem Raum, insbesondere einem Fahrzeug, das es erlaubt, unabhängig von Druckänderungen einer äußeren Atmosphäre den Druck im Raum konstant zu halten. Der Raum ist mit einem Drucksensor versehen, der mit einer Steuerung verbunden ist. Die Steuerung steuert ferner Lüftungsdrosseln in einem Zu- und einem Abluftkanal. Die Steuerung der Vorrichtung berücksichtigt Leckagen des Raums.

Der vorliegenden Erfindung liegt die **Aufgabe** zugrunde, ein gattungsgemäßes Verfahren derart weiterzubilden, daß die Gebäudedichtheit unter Vereinfachung des Meßverfahrens kostengünstig ausgeführt werden kann. Darüber hinaus sollen Vorrichtungen für die automatische Belüftung eines Gebäudes derart weitergebildet werden, daß sie mit wenig Aufwand zur Ermittlung der Luftdichtheit einsetzbar sind.

Als **Lösung** wird mit der vorliegenden Erfindung ein gattungsgemäßes Verfahren vorgeschlagen, wobei zum Ermitteln der Dichtheit die Zuluft- oder der Abluftkanal mittels einer Verschlußvorrichtung geschlossen wird, mittels dem Ventilator über den offenen Kanal ein von einem Luftdruck einer äußeren Atmosphäre abweichender Luftdruck erzeugt und mittels einer Druckmeßeinrichtung gemessen wird, mittels Mitteln zur Strömungsmessung eine den Ventilator durchströmende Luftmenge ermittelt und aus der den Ventilator durchströmenden Luftmenge und dem gemessenen Luftdruck die Dichtheit des Raums ermittelt wird.

Vorteilhaft kann erreicht werden, daß unter Verwendung einer vorhandenen lüftungstechnischen Einrichtung ein aussagekräftiger Wert für die Dichtheit des Raums ermittelt werden kann. Darüber hinaus bietet diese Ausgestaltung den Vorteil, daß ein Raum ohne zusätzliche Mittel und Montagearbeiten auf seine Dichtheit geprüft werden kann. Ferner ermöglicht diese Ausgestaltung, daß die Messung bedarfsweise wiederholt werden kann, um so den Dichtheitszustand des Raumes über die Zeit verfolgen zu können. Hieraus können beispielsweise Daten für die Qualität der Dichtungsmittel oder auch für deren Zuverlässigkeit gewonnen werden. Der Ventilator kann zu diesem Zweck als Axialventilator, als Radialventilator, als Tangentialventilator oder dergleichen ausgebildet sein. Er kann darüber hinaus eine Drehzahlregelung aufweisen, mit der eine vorgebbare Drehzahl einstellbar ist. Die Druckmeßeinrichtung kann als bekannte Luftdruckmeßeinrichtung ausgebildet sein. Das Ermitteln der Luftströmung kann durch bekannte Strömungsmeßeinrichtungen wie Normblenden, Normdüsen, Venturi-Rohre oder dergleichen im Strömungskanal des Ventilators bestimmt werden. Auch kann ein Ultraschall-Strömungsmesser zur Bestimmung der Strömungsgeschwindigkeit verwendet werden. Aus der gemessenen Luftströmung wird dann gemäß den durch die Normung vorgegebenen Rechenregeln die Dichtheit des Raums ermittelt. In analoger Weise ist das Verfahren sowohl zur Messung mit Unterdruck als auch zur Messung mit Überdruck geeignet.

In einer weiteren Ausgestaltung wird vorgeschlagen, daß die den Ventilator durchströmenden Luftmenge mittels einer vorgebbaren Ventilatorcharakteristik des Ventilators ermittelt wird. Die den Ventilator durchströmende Luftmenge kann vorteilhaft aus Betriebsgrößen des Ventilators bzw. aus der Ventilatorcharakteristik ermittelt werden, wie beispielsweise Drehzahl, Betriebsspannung, Stromaufnahme und dergleichen. Ein separates Meßmittel kann eingespart werden.

Darüber hinaus wird vorgeschlagen, daß der Ventilator eine vom Ventilator abhängige, maximale, den Ventilator durchströmende Luftmenge erzeugt. So kann beispielsweise eine separate Messung der den Ventilator durchströmenden Luftmenge dahingehend vereinfacht werden, daß lediglich die aus dem Datenblatt angegebene maximale Fördermenge als die den Ventilator durchströmende Luftmenge angesetzt wird. Ferner können Einstellmittel eingespart werden, die andernfalls erforderlich wären, um mit dem Ventilator eine vorgegebene durchströmbare Luftmenge einzustellen. Ein besonders einfacher Verfahrensablauf kann erreicht werden.

Weiterhin wird vorgeschlagen, daß der Luftdruck jeweils bei unterschiedlichen Betriebszuständen des Ventilators ermittelt wird. So können beispielsweise zwei Betriebszustände vorgesehen sein, die durch unterschiedliche Drehzahlen und/oder unterschiedliche Stellungen von Schaufelrädern des Ventilators gebildet werden, durch die vorgebbare Drücke im Raum einstellbar sind. Beispielsweise wird jeweils der Luftdruck zwischen zwei sich stationär einstellenden Drücken im Raum ermittelt, die sich aus unterschiedlichen Betriebszuständen des Ventilators ergeben. Vorteilhaft kann die Ermittlung der Dichtheit durch Betätigung nur einer Vorrichtung, und zwar des Ventilators, erreicht werden. Es kann ferner vorgesehen sein, mehrere Messungen durchzuführen, um eine größere Genauigkeit zu erreichen. Dabei können die Messungen bei unterschiedlichen Drücken ausgeführt werden, und zwar sowohl Unterdruck als auch Überdruck oder eine Kombination hiervon.

In einer Ausgestaltung wird vorgeschlagen, daß bei einem Betriebszustand der Ventilator abgeschaltet wird. Vorteilhaft kann dieser Betriebszustand ohne zusätzlichen Energieaufwand erreicht werden.

Daneben wird vorgeschlagen, daß eine Luftdruckdifferenz gegenüber einer äußeren, den Raum umgebenden Atmosphäre erzeugt wird. In dieser Ausgestaltung wird die Luftdruckdifferenz zwischen der äußeren, den Raum umgebenden Atmosphäre und dem Rauminneren gemessen. Mit nur einem Betriebszustand des Ventilators kann bereits die Dichtheit des Raumes ermittelt werden.

In einer bevorzugten Ausgestaltung wird vorgeschlagen, daß im Raum ein Unterdruck oder ein Überdruck in einem Bereich von etwa 2 bis 30 Pa, vorzugsweise in einem Bereich von ungefähr 3 bis 25 Pa, insbesondere in einem Bereich von 6 bis 20 Pa, erzeugt wird. Mit den üblichen, verfügbaren Meßgeräten für Druck ist diese Größe des Drucks hinreichend genau meßbar. Alternativ kann jedoch auch eine Luftdruckdifferenz beispielsweise in einem Bereich von 1 bis 40 Pa erzeugt werden, vorzugsweise im Bereich von 3 bis 35 Pa. So kann zum Beispiel bei großen Leckagen die Luftdruckdifferenz in einem Bereich von 1 bis 20 Pa, vorzugsweise von 2 bis 10 Pa, liegen. Dagegen kann beispielsweise bei kleinen Leckagen die Luftdruckdifferenz im Bereich von 15 bis 45 Pa, vorzugsweise von 20 bis 30 Pa, liegen.

In einer vorteilhaften Weiterbildung der vorliegenden Erfindung wird vorgeschlagen, daß bei einer mit dem Raum verbindbaren lüftungsgtechnischen Einrichtung mit wenigstens einem Zuluftkanal bzw. ein Abluftkanal während des Ermittelns der Luftströmung der Zuluftkanal bzw. der Abluftkanal geschlossen wird. So kann vorteilhaft ein bereits in einer lüftungstechnischen Einrichtung vorhandener Abluftventilator bzw. Zuluftventilator verwendet werden, je nach dem ob ein Unterdruck oder ein Überdruck erzeugt werden soll. Vorzugsweise ist der Ventilator entsprechend der Druckeinstellung als Zuluftventilator mit dem Zuluftkanal oder als Abluftventilator mit dem Abluftkanal verbunden. Der Aufwand zur Durchführung der Dichtheitsmessung kann reduziert werden. Darüber hinaus ermöglicht diese Ausgestaltung eine weitere Erleichterung der Messung, insbesondere wenn diese in beliebigen vorgebbaren Abständen wiederholt werden soll. Beispielsweise wird der Zuluftkanal zur Erzeugung eines Unterdrucks geschlossen, während zur Erzeugung eines Überdrucks der Abluftkanal geschlossen wird.

Um ein Maß für die Dichtheit des Raums erhalten zu können, wird vorgeschlagen, daß mittels einer Recheneinheit eine Luftwechselrate ermittelt wird. Die Luftwechselrate gibt an, wie oft pro Stunde der Raum von einem Volumenstrom seines Rauminhalt durchströmt wird, wie in der DIN EN 13929 definiert. Die Luftwechselrate kann Informationen darüber liefern, wie oft in einer bestimmten Zeiteinheit eine dem Raumvolumen entsprechende Luftmenge diesen durchströmt. Der Einsatz einer Recheneinheit ermöglicht eine schnelle genaue Ermittlung der erforderlichen Daten. Darüber hinaus ermöglicht die Verwendung der Recheneinheit eine Protokollierung der Daten, um beispielsweise Veränderungen der Dichtheit über der Zeit nachhalten zu können.

In einer weiteren vorteilhaften Ausgestaltung wird vorgeschlagen, daß mittels der Recheneinheit eine automatische Ermittlung der Dichtheit durchgeführt wird. So kann die Messung der Dichtheit mit nur geringem oder sogar ohne manuellen Aufwand ausgeführt werden. Eine kostengünstige schnelle Ermittlung der Dichtheit des Raums kann erreicht werden. Darüber hinaus kann durch entsprechende Steuerung ein Zuluftkanal mittels der Recheneinheit automatisch geschlossen werden, um die Messung durchführen zu können.

Die Erfindung eignet sich insbesondere für eine lüftungstechnische Einrichtung für einen Raum, in den mittels eines Zuluftkanals Zuluft zuführbar ist und aus dem mittels eines Abluftkanals Abluft abführbar ist, wobei wenigstens einer der Kanäle mit einem Ventilator in lüftungstechnischer Verbindung steht, wobei wenigstens der andere Kanal eine Verschlußvorrichtung zum luftdichten Verschließen des Kanals aufweist. Vorteilhaft kann ein ohnehin in der lüftungstechnischen Einrichtung vorhandenes Kanalsystem für die Messung der Dichtheit des Raums eingesetzt werden. Das Vorsehen eines Meßventilators mit dem entsprechenden einbautechnischen Aufwand für die Dichtheitsmessung kann vermieden werden. Es können somit zusätzliche bautechnische Maßnahmen, um den vorgebbaren Druck im Raum aufbauen zu können, vermieden werden. Die Verschlußvorrichtung kann beispielsweise aus einer Luftklappe gebildet sein, die manuell und/oder ferngesteuert betätigbar ist. Zur Fernsteuerung kann beispielsweise ein elektrischer, hydraulischer oder pneumatischer Antrieb vorgesehen sein, z. B. ein Hubmagnet.

Es wird vorgeschlagen, daß jeder Kanal einen Ventilator aufweist. So können vorteilhaft Messungen sowohl mit Unterdruck als auch mit Überdruck ausgeführt werden. Ferner kann gegenüber der Ausgestaltung mit nur einem Ventilator ein größerer Druck erzeugt werden. Vorteilhaft können die für die Dichtheitsmessung erforderlichen Elemente in der lüftungstechnischen Einrichtung zusammengefaßt werden und aufeinander abgestimmt sein. Es besteht somit die Möglichkeit, bei Räumen mit bereits vorhandener lüftungstechnischer Einrichtung einfach durch Austausch gegen eine erfindungsgemäße Einrichtung eine Meßmöglichkeit für die Dichtheitsprüfung des Raums zu schaffen. Vorzugsweise sind die Anschlüsse der erfindungsgemäßen lüftungstechnischen Einrichtung derart ausgestaltet, daß ein Montageaufwand gering ist.

Ferner wird vorgeschlagen, daß jeder Kanal eine Verschlußvorrichtung aufweist. Das Durchführen von Messungen der Dichtheit sowohl bei Unterdruck als auch bei Überdruck kann weiter vereinfacht werden. So kann vorteilhaft ohne großen Aufwand das Meßverfahren bezüglich der räumlichen Verhältnisse optimal angepaßt werden. Ferner ermöglicht diese Ausgestaltung mehrere Messungen mit unterschiedlichen Drücken, insbesondere mit Unterdruck und/oder Überdruck, um die Meßgenauigkeit zu erhöhen. Ferner wird ermöglicht, daß unsymmetrisch wirkende Leckagen ermittelt werden können.

Darüber hinaus kann erreicht werden, daß die Ermittlung der Dichtheit zu beliebigen vorgebbaren Zeitpunkten wiederholbar ist, ohne daß ein signifikanter mechanischer Aufwand erforderlich wäre. So können Kosten eingespart werden. Der Ventilator kann im Zuluftkanal und/oder im Abluftkanal angeordnet sein. Ferner kann erreicht werden, daß Messungen in vorgebbaren Zeitabständen mit geringem Aufwand wiederholt werden, beispielsweise um den Zustand bautechnischer Dichtungsmaßnahmen zu prüfen, eine Alterung zu ermitteln oder dergleichen. Ferner kann durch beispielsweise automatische Ansteuerung der Verschlußvorrichtung der Zuluftkanal automatisch geschlossen werden, wenn im Raum ein Unterdruck erzeugt werden soll. Die Verschlußvorrichtung kann beispielsweise als Luftklappe, Schieber, Ventil oder dergleichen ausgebildet sein. Zum Ansteuern kann die Verschlußvorrichtung ferner einen elektrischen, pneumatischen oder hydraulischen Antrieb, wie beispielsweise einen Hubmagneten, einen Stellmotor oder dergleichen, aufweisen. In analoger Weise kann natürlich auch eine Verschlußvorrichtung zum luftdichten Verschließen eines Abluftkanals vorgesehen sein, insbesondere wenn im Raum ein Überdruck erzeugt werden soll.

Es wird ferner vorgeschlagen, daß die Verschlußvorrichtung in einem etwa höchstens 5 m vom Ventilator entfernten strömungstechnischen Abstand angeordnet ist. Es kann erreicht werden, daß die Verschlußvorrichtung von der lüftungstechnischen Einrichtung direkt gesteuert wird. Darüber hinaus können Beeinflussungen aufgrund der Entfernung zwischen Verschlußvorrichtung und lüftungstechnischer Einrichtung reduziert werden.

Darüber hinaus wird vorgeschlagen, daß Mittel zur Strömungsmessung vorgesehen sind. Separate Meßmittel können eingespart werden. Die Durchführung der Dichtheitsmessung kann weiter vereinfacht werden, insbesondere wenn ein automatisierter Meßablauf vorgesehen ist.

In einer vorteilhaften Weiterbildung wird vorgeschlagen, daß die Mittel zur Strömungsmessung durch eine vorgebbare Ventilatorcharakteristik gebildet sind.

Insbesondere bei großen Kanalquerschnitten kann mit geringem Aufwand eine genaue Messung der Luftströmung erreicht werden. Darüber hinaus kann eine Reduzierung der Anzahl von Bauteilen und der Baugröße erreicht werden.

Es wird ferner vorgeschlagen, daß eine Druckmeßeinrichtung vorgesehen ist. Der Meßablauf kann weiter automatisiert und/oder vereinfacht werden.

Darüber hinaus wird vorgeschlagen, daß die Druckmeßeinrichtung eine Differenzdruckmeßeinrichtung ist. Eine hohe Genauigkeit der Druckmessung kann erreicht werden. So kann beispielsweise als Referenzdruck ein Druck verwendet werden, der den Raum in einer äußeren Atmosphäre umgibt. Mit der Differenzdruckmeßeinrichtung kann jeweils der Druckunterschied zwischen dem Rauminneren und der Referenzumgebung ermittelt werden.

In einer vorteilhaften Weiterbildung wird vorgeschlagen, daß die lüftungstechnische Einrichtung eine Steuereinheit für den Ventilator aufweist. Mit der Steuereinheit kann neben der Drehzahl beispielsweise auch die Stellung von Schaufeln des Rotors des Ventilators oder dergleichen gesteuert werden, um die Ventilatorcharakteristik wunschgemäß einstellen zu können.

Es wird weiterhin vorgeschlagen, daß die lüftungstechnische Einrichtung eine Recheneinheit aufweist. Mit der Recheneinheit können die Daten ausgewertet und die relevanten Parameter wie Luftaustauschrate und dergleichen automatisch ermittelt werden. Die Recheneinheit kann darüber hinaus über eine nicht näher bezeichnete Kommunikationsverbindung mit einer Zentrale verbunden sein, an die die Daten übermittelt werden. Es kann auch vorgesehen sein, daß die Messung der Dichtheit des Raums von der Zentrale aus automatisch mittels der Recheneinheit durchgeführt wird.

In einer weiteren Ausgestaltung der vorliegenden Erfindung wird vorgeschlagen, daß im Abluftkanal, Zuluftkanal und/oder im Strömungskanal des Ventilators ein Drosselelement angeordnet ist. So kann beispielsweise in Abhängigkeit von der Erzeugung eines Unterdrucks oder eines Überdrucks das Drosselelement im entsprechenden Kanal angeordnet sein. Mit dem Drosselelement kann die Ventilatorcharakteristik weiterhin in gewünschter Weise beeinflußt werden.

Weiterhin wird vorgeschlagen, daß die lüftungstechnische Einrichtung ein Gehäuse aufweist. Die lüftungstechnische Einrichtung kann somit als eine kompakte Baueinheit gehandhabt werden. Im Störungs- und/oder Wartungsfall kann die lüftungstechnische Einrichtung mit geringem Aufwand ausgetauscht werden. Besonders vorteilhaft ist wenigstens eine Verschlußvorrichtung im Gehäuse angeordnet. So kann während der Überprüfung des bestimmungsgemäßen Betriebs der lüftungstechnischen Einrichtung die Funktion der Verschlußvorrichtung ebenfalls mit überprüft werden, ohne daß Tätigkeiten an der entsprechenden lüftungstechnischen Installation des Raums erforderlich wären. Eine kompakte Baueinheit kann geschaffen werden, die alle Funktionen, die für die Dichtheitsmessung erforderlich sind, umfaßt. Vorzugsweise ist in der lüftungstechnischen Einrichtung weiterhin eine Auwerteeinheit angeordnet, die aus den Meßergebnissen das Maß für die Dichtheit des Raums ermittelt und dies zur Anzeige bringt. Daneben kann natürlich ach vorgesehen sein, daß das Ergebnis neben den Meßwerten an eine Zentrale übermittelt wird. Vorteilhaft ist ebenfalls die Steuereinheit mit umfaßt, welche den Ablauf des Meßverfahrens steuert. Die Steuereinheit steuert vorzugsweise auch die Verschlußvorrichtungen und/oder Ventilatoren. Vorteilhaft können für die Dichtheitsmessung erforderliche Elemente in der lüftungstechnischen Einrichtung, beispielsweise im Gehäuse zusammengefaßt, selbst vorgesehen sein. Diese Ausgestaltung eignet sich daher insbesondere auch zur Nachrüstung in bereits bestehende Vorrichtungen. Montageaufwand und Kosten können reduziert werden. Darüber hinaus bietet diese Ausgestaltung den Vorteil, daß bei Störungen bezüglich der Funktion der Dichtheitsmessung einfach durch Austausch der lüftungstechnischen Einrichtung die Störung behoben werden kann.

In einer weiteren Ausgestaltung der vorliegenden Erfindung wird vorgeschlagen, daß die lüftungstechnische Einrichtung durch eine Wohnungslüftungseinrichtung gebildet ist. Auf diese Weise kann der zusätzliche Aufwand besonders gering gehalten werden. So kann die Wohnungslüftungseinrichtung bereits für die Vornahme der Dichtheitsmessung ausgelegt sein und beispielsweise einen geeigneten Programmablauf auf Anforderung automatisch ausführen. Darüber hinaus kann vorgesehen sein, daß eine vorhandene Wohnungslüftungseinrichtung durch eine zur Durchführung des erfindungsgemäßen Verfahrens geeignete ersetzt wird oder auch daß eine vorhandene Wohnungslüftungseinrichtung zur Ausführung des erfindungsgemäßen Verfahrens nachgerüstet wird. In allen Fällen kann mit vergleichsweise geringem Aufwand die Möglichkeit der Messung einer Gebäudedichtheit geschaffen werden. Mit der Möglichkeit des Nachrüstens vorhandener Wohnungslüftungseinrichtungen kann ferner eine breite Anwendung des erfindungsgemäßen Verfahrens eröffnet werden, beispielsweise unter Vermeidung der Vornahme bautechnischer Anpassungen.

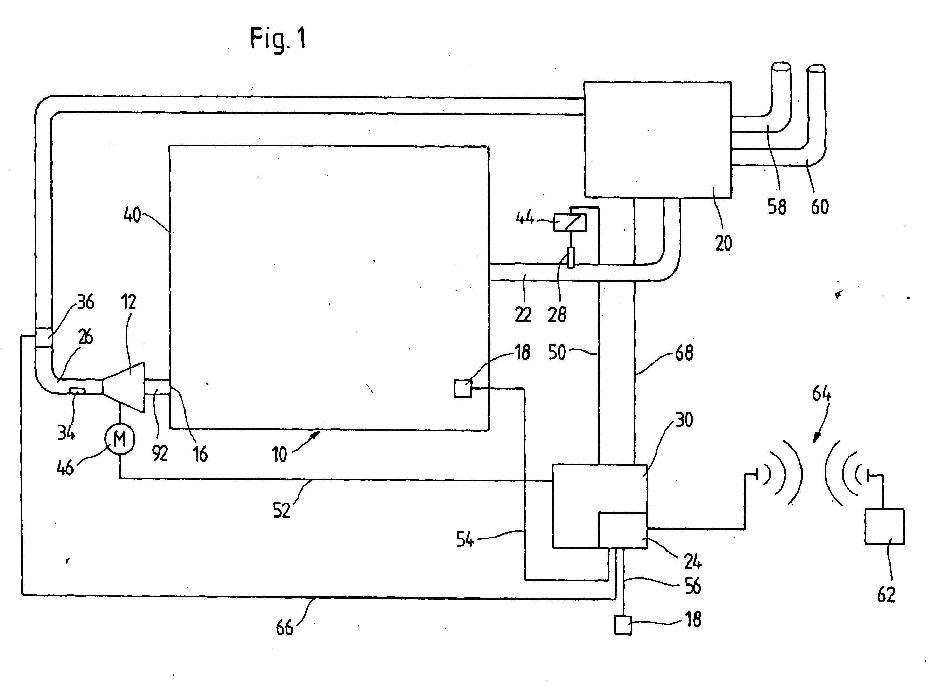

Weitere Vorteile und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen. Die Zeichnungen sind Schema-Zeichnungen und dienen nur der Erläuterung der folgenden Ausführungsbeispiele.

Es zeigen:

Fig. 1    schematisch einen Aufbau einer Vorrichtung.

Fig. 2    einen ersten schematischen erfindungsgemäßen Verfahrensablauf,

Fig. 3    einen zweiten schematischen erfindungsgemäßen Verfahrensablauf,

Fig. 4    einen Ausschnitt der Innenseite der Wand des Raums mit einem Ventilator, dessen Gehäuse luftdicht in einer Öffnung der Wand angeordnet ist,

Fig. 5    einen Schnitt durch ein Gebäude mit einer lüftungstechnischen Einrichtung und

Fig. 6    ein Diagramm zur Umrechnung von gemessener Druckdifferenz in Leckvolumenstrom und Luftwechselzahl.

In Fig. 1 ist ein prinzipieller Aufbau einer Vorrichtung zum Ermitteln der Dichtheit eines Raums 10 mit einer lüftungstechnischen Einrichtung dargestellt. Diese Figur zeigt eine Öffnung 16 in einer Raumwand 40, an der ein Kanal 92 angeordnet ist, welcher mit einem Ventilator 12 luftdicht verbunden ist. Der Ventilator 12 saugt im Betrieb über den Kanal 92 Luft aus dem Raum 10 und fördert diese zu einem Abluftkanal 26, der mit einer Klimaanlage 20 verbunden ist. Im Abluftkanal 26 ist für eine optimale Ventilatorcharakteristik eine Drossel 34 angeordnet, die vorliegend aus einer Querschnittsverengung des Kanals 26 besteht. Ferner ist strömungstechnisch hinter der Drossel 34 eine Strömungsmeßeinheit 36 angeordnet, mit der der Volumenstrom der durchströmenden Luft ermittelbar ist. Der Raum 10 ist ferner mittels einem Zuluftkanal 22 mit der Klimaanlage 20 verbunden, über den dem Raum 10 Luft zuführbar ist. Der Zuluftkanal 22 weist eine Luftklappe 28 auf, die mittels eines Stellmagnets 44 in die gewünschte Stellung, entweder offen oder geschlossen, bringbar ist. Der Lüfter weist ferner einen Antriebsmotor 46 auf, mit dem ein Schaufelrad 48 des Ventilators 12 drehbar antreibbar ist. Der Motor 46 und der Stellmagnet 44 sind über Leitungen 50, 52 mit einer Steuereinheit 30 verbunden, die Bestandteil der lüftungstechnischen Einrichtung ist. Darüber hinaus besteht zwischen der Steuereinheit 30 und der Klimaanlage 20 eine Kommunikationsverbindung durch die Leitung 68. Ferner ist ein Rechner 24 vorgesehen, der über eine nicht näher dargestellte Kommunikationsschnittstelle mit der Steuereinheit 30 in Kommunikationsverbindung steht.

Sowohl im Raum 10 als auch in der den Raum 10 umgebenden, nicht näher bezeichneten Atmosphäre ist jeweils ein Drucksensor 18 angeordnet, die über elektrische Leitungen 54, 56 mit dem Rechner 24 verbunden sind. Die Klimaanlage 20 ist über Luftkanäle 58, 60 mit der Umgebungsatmosphäre verbunden. Über eine Funkverbindung 64 steht der Rechner 24 mit einer Zentrale 62 in Kommunikationsverbindung, welche jedoch auch leitungsgebunden oder ähnliches sein kann.

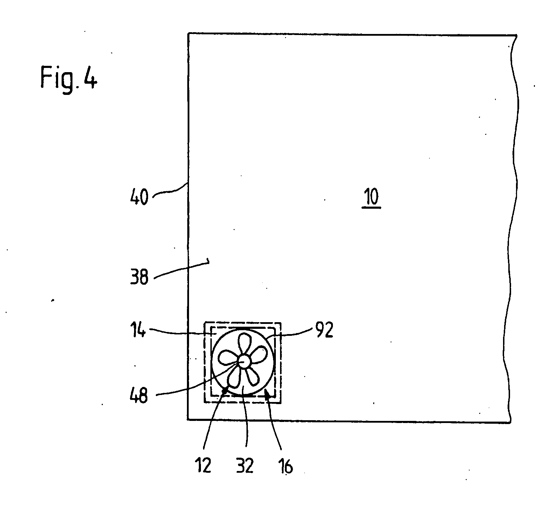

Fig. 4 zeigt einen vergrößerten Ausschnitt des Bereichs der Öffnung 1 mit Blick auf die Innenseite 38 der Wand 40 des Rauminneren. In der Wand 40 des Raums 10 ist eine quadratische Öffnung 16 als Mündung des Kanals 92 angeordnet. Der am gegenüberliegenden Ende des Kanals 92 angeordnete Ventilator 12 weist ein rechteckiges Gehäuse 14 auf, in welches mittig ein im wesentlichen kreisförmiger Strömungskanal 32 angeordnet ist. Im Strömungskanal 32 des Ventilators 12 ist ein Schaufelrad 48 angeordnet, welches über den in dieser Darstellung nicht sichtbaren Motor 46 antreibbar ist (Fig. 1). In dieser Ausgestaltung sind Drehrichtung und Schaufelstellung so gewählt, daß der Betrieb des Ventilators 12 eine Luftabsaugung aus dem Raum 10 bewirkt.

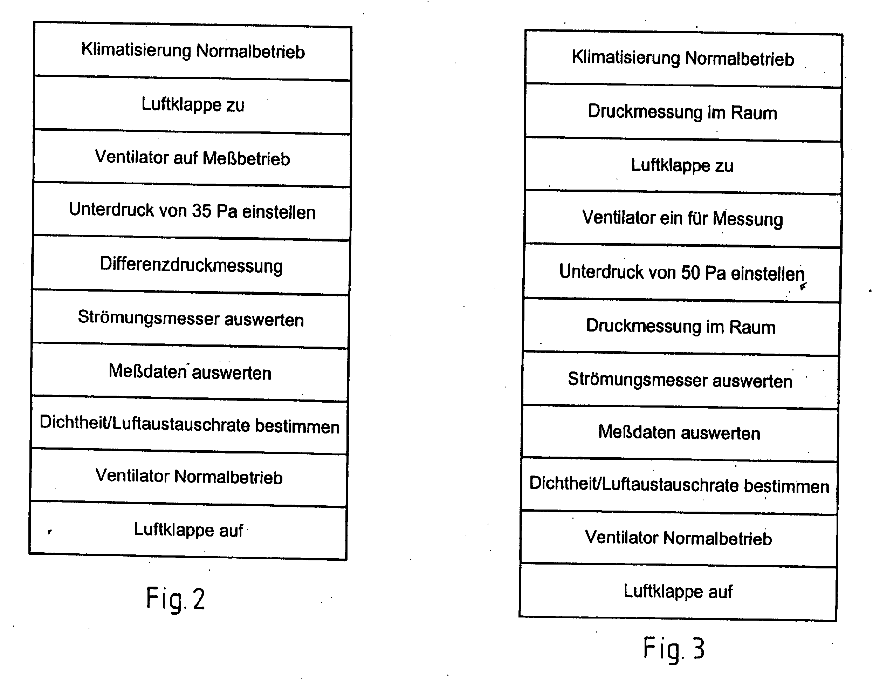

Ein beispielhafter Verfahrensablauf für den Betrieb der lüftungstechnischen Einrichtung ist in Fig. 2 dargestellt. Ausgegangen wird vom Betriebszustand "Klimatisierung Normalbetrieb", in dem der Raum 10 über eine nicht weiter dargestellte Regelung in seinem Klima geregelt ist. Die Auslösung der Dichtheitsmessung erfolgt in dieser Ausgestaltung durch die Zentrale 62, die über die Kommunikationsverbindung 64 den Rechner 24 den Befehl zur Ausführung der Dichtheitsmessung übermittelt. Im Normalbetrieb ist die Luftklappe 28 in der geöffneten Stellung. Der Rechner 24 veranlaßt über die Steuereinheit 30, daß der Motor 46 des Ventilators 12 abgeschaltet wird. Nach einer hinreichenden Zeit, in der sich ein stationärer Druck im Raum 10 einstellen kann, wird mittels der Druckmeßeinrichtungen 18 der Druck sowohl im Raum 10 als auch in einer äußeren, den Raum 10 umgebenden Atmosphäre gemessen. Der Rechner 24 veranlaßt über die Steuereinheit 30 und die Leitung 50, daß der Stellmagnet 44 die Luftklappe 28 in die geschlossene Position verfährt. Im folgenden Schritt wird der Motor 46 des Ventilators 12 wieder eingeschaltet, wobei dessen Drehzahl mittels der Steuereinheit 30 so geregelt wird, daß im Raum 10 ein Unterdruck von 5 Pa entsteht. Alternativ kann auch ein Betrieb des Ventilators 12 bei einer maximalen Luftfördermenge vorgesehen sein, wobei der sich stationär einstellende Druck ermittelt wird. Sobald ein stationärer Druckzustand erreicht ist, wird die mittels der Strömungsmeßeinheit 36 gemessene Luftströmung im Abluftkanal 26 über die Leitung 66 an die Recheneinheit übermittelt. Im Fall der maximalen Luftfördermenge ist der Schritt der Messung der Luftströmung nicht erforderlich und es kann mit hinreichender Genauigkeit der Wert aus dem technischen Datenblatt des Ventilators verwendet werden. Die Recheneinheit 24 errechnet aus den gemessenen Werten die gewünschten Daten, die die Dichtheit bewerten, insbesondere die Luftaustauschrate.

Die errechneten Daten sowie auch die Meßdaten werden über die Kommunikationsverbindung 64 an die Zentrale 62 übermittelt. Im folgenden Schritt wird die Luftklappe 28 über den Stellmagneten 44 wieder in die geöffnete Position zurückverfahren und der Motor 46 mittels der Steuereinheit 30 wieder im "Normalbetrieb Klimatisierung" betrieben. Über die Leitung 68 besteht eine Kommunikationsverbindung zwischen der Steuereinheit 30 und der Klimaanlage 20, die während der Dichtheitsmessung abgeschaltet werden kann oder in einem dafür geeigneten Betriebsmodus umgeschaltet wird.

Alternativ kann natürlich auch vorgesehen sein, daß die Messung durch lokales Bedienpersonal vor Ort ausgeführt wird, wozu eine mit dem Rechner 24 verbundene Ein-/Ausgabeeinheit vorgesehen ist. Die Eingabe kann beispielsweise durch eine Tastatur oder auch ein Touchpanel oder dergleichen gebildet sein, wobei die Ausgabeeinheit durch einen Bildschirm oder dergleichen gebildet sein kann. Es können jedoch auch beide Möglichkeiten der Durchführung der Dichtheitsmessung vorgesehen sein. Daneben besteht die Möglichkeit, daß die Dichtheitsmessung nur vor Ort ausgeführt wird, wobei die Meßergebnisse und/oder Meßdaten über die Kommunikationsverbindung 64 zur Zentrale 62 übermittelt werden können.

In einer weiteren Ausgestaltung wird vorgeschlagen, daß die Druckmessung lediglich nach Einstellung des vorgegebenen Unterdrucks als Differenzdruckmessung zur äußeren, den Raum 10 umgebenden Atmosphäre durchgeführt wird. Ein Meßschritt kann eingespart werden.

In Fig. 3 ist ein weiterer, alternativer Ablauf des erfindungsgemäßen Verfahrens dargestellt, bei dem lediglich eine Druckmessung innerhalb des Raums 10 vorgesehen ist. Die Verfahrensschritte entsprechen ansonsten dem Ausführungsbeispiel zu Fig. 2. In dieser Ausgestaltung kann eine Druckmeßeinrichtung 18 eingespannt werden, und zwar die für den Referenzdruck in der den Raum 10 umgebenden Atmosphäre.

In analoger Weise kann das erfindungsgemäße Verfahren natürlich auch mit Überdruck ausgeführt werden. Vorteilhaft ist dazu der Ventilator in einem Zuluftkanal angeordnet, während der Abluftkanal eine luftdicht verschließbare Verschlußvorrichtung aufweist. Die weiteren Meßbedingungen und Parameter werden in äquivalenter Weise eingestellt, insbesondere kann anstelle des Unterdrucks von 5 Pa ein Überdruck von 10 Pa eingestellt werden. Der Meß- und Berechnungsablauf kann beibehalten werden, wobei zu berücksichtigen ist, daß nunmehr die Luftdruckdifferenz negativ ist.

Eine kennzeichnende Größe für die Dichtheit eines Raums ist im Stand der Technik der sogenannte $n_{50}$-Wert, der in der Einheit 1/h angegeben wird. Diese Größe wird durch Division des Leckagestroms durch das Raumvolumen ermittelt und gibt an, wie oft in einer Stunde das Volumen des Raumes ausgetauscht wird. Gemäß DIN 4108-7 als auch EnEV, § 5 ist für Gebäude mit raumlufttechnischen Anlagen ein Obergrenzwert von

$$n_{50} = 1{,}5 \ 1/h$$

einzuhalten. Für Gebäude ohne raumlufttechnische Anlagen beträgt dieser Wert

$$n_{50} = 3 \ 1/h.$$

Üblicherweise wird im Stand der Technik in eine Tür oder ein Fenster ein Ventilator eingesetzt, mit dem ein Überdruck von 50 Pa erzeugt wird. Die Drehzahl des Ventilators wird dabei entsprechend geregelt. Die durch den Lüfter erzeugte Luftströmung wird gemessen, da diese der Gesamtheit der durch die Leckage abströmenden Luftmenge aus dem Raum entspricht. Wird diese Größe durch das Raumvolumen dividiert, so ergibt sich die Luftwechselrate $n_{50}$.

Eine weitere Größe ist die Luftdurchlässigkeit $q_{50}$, die ebenfalls aus den gemessenen Daten ermittelbar ist, und die angibt, wie groß die Luftdurchlässigkeit der gesamten Hüllfläche des Raumes ist. Berechnet wird diese Größe wie folgt:

$$q_{50} = \frac{\dot{V}_{50}}{A_e} \ ,$$

wobei $A_e$ die Hüllfläche des Raumes bzw. des Gebäudes darstellt.

Eine weitere Größe, welche aus den Meßdaten ermittelbar ist, ist der nettogrundflächenbezogene Leckagestrom $w_{50}$, bei dem sich der Leckagestrom $V_{50}$ auf die Nettogrundfläche des Raums bezieht und der wie folgt berechnet wird:

$$w_{50} = \frac{\dot{V}_{50}}{A_f} \cdot ,$$

wobei $A_f$ die Nettogrundfläche des Raums darstellt. Der Index $_{50}$ bei den angegeben Größen bezieht sich auf den Druck von 50 Pa. Wird ein anderer Druck zur Messung verwendet, wird der Index entsprechend angepaßt.

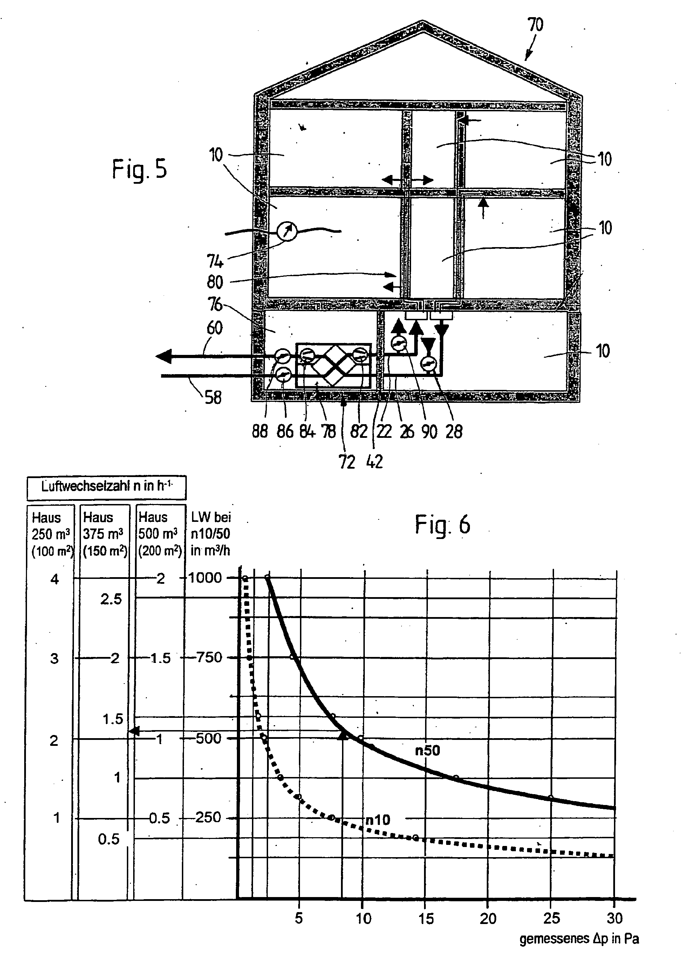

Der Vorteil des erfindungsgemäßen Verfahrens gegenüber den bekannten Verfahren ist, daß mit geringem mechanischem und manuellem Aufwand eine Druckmessung eines Raums unter Verwendung vorhandener Belüftungseinrichtungen durchgeführt werden kann. Das Meßverfahren ist derart ausgelegt, daß aus den ermittelten Größen für Druck und Luftströmung und mittels einer in Fig. 6 dargestellten Tabelle der auf den Normaldruck von 50 Pa bezogene Wert der Dichtheit ermittelt werden kann, selbst wenn der tatsächliche Meßdruck vom Normmeßdruck 50 Pa abweicht. Insbesondere kann bei niedrigen Drücken ein hinreichend genaues Meßergebnis für die Dichtheit des Raumes ermittelt werden. Die Erfindung ermöglicht daher eine Messung unabhängig von Normgrößen und mit handelsüblichen Komponenten und mit geringem Montageaufwand. So können Kosten eingespart werden sowie eine Überprüfung der Dichtheit in regelmäßigen Abständen mit geringem Aufwand wiederholt werden.

In einer weiteren Ausgestaltung zeigt Fig. 5 einen Schnitt durch ein Gebäude 70, welches mehrere Räume 10 aufweist. Die Räume 10 sind lüftungstechnisch über ein Kanalsystem 80 mit einer in einem Raum 76 des Gebäudes 70 angeordneten lüftungstechnischen Einrichtung 72 verbunden. Das Kanalsystem 80 weist einen Zuluftkanal 22 und einen Abluftkanal 26 auf. Die Kanäle 22, 26 sind im Normalbetrieb mit dem Kanalsystem 80 des Gebäudes 70 zum Zwecke der bestimmungsgemäßen Belüftung verbunden. Die Kanäle 22, 26 weisen ferner unter Umgehung des Kanalsystems 80 direkte Verbindungen mit wenigstens einem Raum 10 auf, die jeweils mittels einer Luftklappe 28, 90 zum Raum 10 geöffnet oder geschlossen werden können. Hinsichtlich der Antriebsmittel wird auf die Beschreibung zu Fig. 1 verwiesen. Die lüftungstechnische Einrichtung 72 ist ferner mit einem Luftkanal 58 zum Ansaugen von Frischluft aus einem das Gebäude 70 umgebenden Bereich sowie mit einem Luftkanal 60 zum Abführen von Abluft aus dem Gebäude 70 in den das Gebäude 70 umgebenden Bereich verbunden. In den Luftkanälen 58, 60 sind jeweils Luftklappen 86, 88 angeordnet, mittels derer die Luftkanäle 58, 60 verschließbar sind. Die lüftungstechnische Einrichtung 72 weist ferner zwei Ventilatoren 82, 84 auf, wobei jeweils ein Ventilator 82 zum Fördern der Zuluft und ein Ventilator 84 zum Fördern der Abluft vorgesehen ist. Die lüftungstechnische Einrichtung 72 ist in einem Gehäuse 78 angeordnet. Ferner ist in einem Raum 10 des Gebäudes 70 eine DifferenzdruckMeßeinrichtung 74 angeordnet, mittels der eine Druckdifferenz zwischen einer das Gebäude 70 umgebenden äußeren Atmosphäre und einem Druck im Raum 10 ermittelbar ist. Im Normalbetrieb sind die Luftklappen 28, 90 in der geschlossenen Stellung.

Für die praktische Durchführung der Messung wird vorzugsweise die volle Luftleistung zur Unterdruckbildung im Gebäude 70 verwendet, um beispielsweise Druckverlust des im Gebäude 70 installierten Kanalsystems 80 mit den diesbezüglichen Auswirkungen zu reduzieren. Während des Durchführens der Messung sollten daher Verbindungstüren zwischen den Räumen 10 geöffnet sein, wobei die Luftklappe 28 in die geöffnete Stellung verfahren wird. Die Bildung einer Öffnung zwischen dem Abluftkanal 60 und dem Innenraum 10 und das Verschließen des Luftkanals 58 ist daher nur einfach möglich, wenn die lüftungstechnische Einrichtung 72 oder deren Anschlußstutzen dazu ausgerüstet ist. Lüftungstechnische Einrichtungen sind vorzugsweise mit je einer dicht schließenden Klappe 86, 88 an den Luftkanälen 58, 60 und mit je einer genügend großen Öffnung zum Innenraum 10 in der Zuluft- und/oder Abluftleitung 22, 26 an der lüftungstechnischen Einrichtung 72 ausgerüstet, die entweder im Bereich der lüftungstechnischen Einrichtung 72 oder nach wenigen Metern in der Zu- und/oder Abluftleitung 22, 26 angeordnet sind. Innerhalb des Gebäudes 70 kann der Luftausgleich zwischen den Innenräumen 10 durch geöffnete Türen gewährleistet werden.

Die Öffnungen des Zuluft- und/oder Abluftkanals 22, 26 zum Innenraum 10 können sich nur direkt an der lüftungstechnischen Einrichtung 72 befinden, falls die lüftungstechnische Einrichtung 72 im dichten Bereich des Gebäudes 72 oder des Raums 10 installiert ist oder der Installationsraum 76 durch Abkleben von undichten Stellen abgedichtet werden kann und mit dem dichten Teil des Gebäudes 70 verbunden ist. Befindet sich die lüftungstechnische Einrichtung 72 jedoch in einem nach außen undichten Bereich des Gebäudes 70, so müssen die Öffnungen in einem Bereich der Zu- und Abluftkanäle 22, 26 liegen, der einerseits so nahe wie möglich an der lüftungstechnischen Einrichtung 72 und andererseits im abgedichteten Teil des Gebäudes 70 liegt. Im vorliegenden Fall ist der Installationsraum 76 in lüftungstechnischer Verbindung mit der äußeren, das Gebäude 70 umgebenden Atmosphäre. Um eine brauchbare Messung ausführen zu können, ist daher eine Trennwand 42 vorgesehen, die den Installationsraum 76 im unteren Bereich des Gebäudes 70 vom Raum 10 lüftungstechnisch abdichtend trennt. Im vorliegenden Meßfall wird ferner die Lüftungsklappe 86 geschlossen, wohingegen die Lüftungsklappe 88 in der geöffneten Stellung verbleibt. Darüber hinaus wird der Betrieb des Ventilators 82 eingestellt, wohingegen der Betrieb des Ventilators 84 auf seine maximale Luftfördermenge eingestellt wird. Nachdem sich ein stationärer Unterdruck eingestellt hat, können die Meßwerte aufgenommen und ausgewertet werden. Nach Beendigung der Messung wird die Lüftungsklappe 86 wieder geöffnet, wohingegen die Lüftungsklappe 28 verschlossen wird. Die Ventilatoren 82 und 84 werden wieder in ihrem Normalbetrieb gefahren.

Im Falle einer Messung mit Überdruck wird in dualer Weise vorgegangen. Zunächst wird die Luftklappe 88 in die geschlossene Position verfahren, wohingegen die Luftklappe 90 in die geöffnete Position verfahren wird. Der Ventilator 84 wird abgeschaltet. Dahingegen wird der Ventilator 82 auf seine maximale Luftmengenförderleistung eingestellt. Nachdem sich ein stationärer Überdruck eingestellt hat, werden die Meßwerte aufgenommen und ausgewertet. Danach wird wieder in Normalbetrieb zurückverfahren, indem die Luftklappe 88 geöffnet und die Luftklappe 90 geschlossen wird. Die Ventilatoren 82 und 84 werden wieder im Normalbetrieb gefahren.

Die lüftungstechnische Einrichtung ist dafür vorgesehen, einen Druck von 150 bis 200 Pa zu erzeugen. Es kann entweder Über- oder Unterdruck erzeugt werden. Daher liegt der Betriebspunkt der lüftungstechnischen Einrichtung 72 in der Nähe des gut bekannten Leerlaufluftstroms, weshalb auf eine Messung des eingeblasenen bzw. abgesaugten Volumenstroms der Luft verzichtet und in guter Näherung mit dem Leerluftstrom der lüftungstechnischen Einrichtung 72 bei der eingestellten Drehzahl gerechnet werden kann. In der Regel stellt sich hierbei im Gebäude ein Betriebsdruck von etwa 2 bis 30 Pa ein.

Im vorliegenden Ausführungsbeispiel ist vorgesehen, daß eine Druckdifferenz zwischen einer äußeren, das Gebäude 70 umgebenden Atmosphäre und dem Innenraum 10 mittels eines Handmeßgerätes 74 ermittelt wird. Gute Werte für $n_{50}$ liegen unter 1 / h, ungünstige Werte liegen über 2 / h. Für ein typisches Einfamilienhaus mit beispielsweise 200 m$^2$ Grundfläche und 500 m$^3$ Volumen entspricht dies einem abzusaugenden bzw. einzublasenden Luftvolumen von gut 500 bzw. über 1000 m$^3$ pro Stunde. Typische Luftleistungen von lüftungstechnischen Einrichtungen 72, beispielsweise Komfortlüftungsgeräte, weisen eine Luftfördermenge von 250 bis 500 m$^3$ pro Stunde auf und sind demnach nur für kleine und dichte Gebäude 70 geeignet, um den Standard-Wert des Unter- und/oder Überdrucks von 50 Pa zu erzeugen. Die von der lüftungstechnischen Einrichtung 72 erzeugte Luftmenge kann jedoch einfach vom resultierenden Wert des Unter- und/oder Überdrucks auf die Standard-Werte von 10 bzw. 50 Pa umgerechnet werden. Dazu kann in guter Näherung von einer quadratischen Beziehung zwischen dem Verhältnis der Differenzdrücke und dem Verhältnis der Volumenströme ausgegangen werden.

Ein Diagramm zum Umrechnen der ermittelten Drücke zeigt Fig. 6, woraus für eine bestimmte lüftungstechnische Einrichtung mit Hilfe des gemessenen Unterdrucks direkt der Abluftstrom bei 50 Pa und für verschiedene Gebäudevolumen oder Gebäudeflächen bei mittlerer Raumhöhe direkt der $n_{50}$ - Wert angegeben werden kann. Mit den typischen Luftfördermengen von 250 bis 500 m$^3$ pro Stunde wird bei größeren und undichten Gebäuden nur eine geringe Druckdifferenz von wenigen Pascal erreicht. Damit die Gebäudemessung trotzdem präzise ermittelt wird, soll die Messung bei Windstille oder nur schwachem Wind von maximal 1 Beaufort durchgeführt werden. Die durch den Wind hervorgerufene Druckschwankung beträgt bei einer Windstärke von 1 Beaufort maximal etwa 2,5 Pa. Im Laufe der praktischen Messung ist der durch den Wind hervorgerufene Fehler einfach anhand der beobachteten Schwankung der Druckdifferenz ermittelbar.

Vorliegend wird anhand eines Meßwertes für den Druck mittels Fig. 6 der $n_{50}$ - Wert ermittelt. Die Luftfördermenge beträgt 220 m$^3$ pro Stunde. Im vorliegenden Beispiel wird eine Druckdifferenz von 8 Pa gemessen. Dieser Wert bildet den Ausgangspunkt im Diagramm der Fig. 6 auf der Abszisse. Um den $n_{50}$- Wert zu bestimmen, wird vom Ausgangspunkt eine Parallele zur Ordinate gezogen. Am Schnittpunkt mit der Kurve $n_{50}$ wird eine Parallele zur Abszisse gezogen. Bei einer vorgegebenen Fläche von 150 m$^2$ ergibt sich an der Ordinate ein $n_{50}$ - Wert von ca. 1,4 / h. Dies ist ein mittlerer Wert für die Gebäudedichtheit.

Die in den Fign. dargestellten Ausführungsbeispiele dienen lediglich der Erläuterung der Erfindung und sind für diese nicht beschränkend. Darüber hinaus kann anstelle des Unterdrucks auch die Erzeugung eines Überdrucks vorgesehen sein, wobei Verfahren und Vorrichtung in bekannter Weise vom Fachmann abzuändern sind. Es können auch mehrere Messungen mit unterschiedlichen Drücken, sowohl Unter- als auch Überdruck, ausgeführt werden. Ferner können insbesondere die Einstellung des Unterdrucks als auch die Anordnung von Ventilatoren oder Luftklappen variieren, ohne den Schutzbereich dieser Erfindung zu verlassen.

Bezugszeichenliste

| | |
|---|---|
| 10 | Raum |
| 12 | Ventilator |
| 14 | Ventilatorgehäuse |
| 16 | Öffnung |
| 18 | Druckmeßeinrichtung |
| 20 | Klimaanlage |
| 22 | Zuluftkanal |
| 24 | Rechner |
| 26 | Abluftkanal |
| 28 | Luftklappe |
| 30 | Steuereinheit |
| 32 | Strömungskanal |
| 34 | Drosselelement |
| 36 | Strömungsmeßeinheit |
| 38 | Innenseite |
| 40 | Wand |
| 42 | Wand |
| 44 | Stellmagnet |
| 46 | Motor |
| 48 | Schaufelrad |
| 50 | Leitung |
| 52 | Leitung |
| 54 | Leitung |
| 56 | Leitung |
| 58 | Luftkanal |
| 60 | Luftkanal |
| 62 | Zentrale |
| 64 | Kommunikationsverbindung |
| 66 | Leitung |
| 68 | Leitung |
| 70 | Gebäude |
| 72 | Lüftungstechnische Einrichtung |
| 74 | Druckmeßeinrichtung |
| 76 | Raum |
| 78 | Gehäuse |
| 80 | Kanalsystem |
| 82 | Ventilator |
| 84 | Ventilator |
| 86 | Luftklappe |
| 88 | Luftklappe |
| 90 | Luftklappe |
| 92 | Kanal |

**Patentansprüche**

1. Verfahren zum Ermitteln einer Dichtheit eines Raumes (10), insbesondere eines Gebäudes oder Teilen hiervon, mit einer lüftungstechnischen Einrichtung (20), wobei mittels einem Ventilator (12) über einen Zuluftkanal (22) dem Raum Zuluft (10) zugeführt und Abluft über einen Abluftkanal (26) aus dem Raum (10) abgeleitet wird,
**dadurch gekennzeichnet,**
**daß** zum Ermitteln der Dichtheit der Zuluft- (22) oder der Abluftkanal (26) mittels einer Verschlußvorrichtung (28) geschlossen wird, mittels dem Ventilator (12) über den offenen Kanal (22, 26) ein von einem Luftdruck einer äußeren Atmosphäre abweichender Luftdruck erzeugt und mittels einer Druckmeßeinrichtung (18) gemessen wird, mittels Mitteln zur Strömungsmessung eine den Ventilator (12) durchströmende Luftmenge ermittelt und aus der den Ventilator durchströmenden Luftmenge und dem gemessenen Luftdruck die Dichtheit des Raums (10) ermittelt wird.

2. Verfahren nach Anspruch 1, **dadurch gekennzeichnet, daß** die den Ventilator durchströmenden Luftmenge mittels einer vorgebbaren Ventilatorcharakteristik des Ventilators (12) ermittelt wird.

3. Verfahren nach Anspruch 1 oder 2, **dadurch gekennzeichnet, daß** der Ventilator eine vom Ventilator abhängige, maximale, den Ventilator durchströmende Luftmenge erzeugt.

4. Verfahren nach einem der Ansprüche 1 bis 3, **dadurch gekennzeichnet, daß** der Luftdruck jeweils bei unterschiedlichen Betriebszuständen des Ventilators (12) ermittelt wird.

5. Verfahren nach Anspruch 4, **dadurch gekennzeichnet, daß** bei einem Betriebszustand der Ventilator (12) abgeschaltet wird.

6. Verfahren nach einem der Ansprüche 1 bis 5, **dadurch gekennzeichnet, daß** eine Luftdruckdifferenz gegenüber einer äußeren, den Raum (10) umgebenden Atmosphäre ermittelt wird.

7. Verfahren nach einem der Ansprüche 1 bis 6, **dadurch gekennzeichnet, daß** im Raum (10) ein Unterdruck oder ein Überdruck in einem Bereich von etwa 2 bis 30 Pa, vorzugsweise in einem Bereich von ungefähr 3 bis 25 Pa, insbesondere in einem Bereich von 6 bis 20 Pa, erzeugt wird.

8. Verfahren nach einem der Ansprüche 1 bis 7, **dadurch gekennzeichnet, daß** bei einer mit dem Raum (10) verbindbaren lüftungstechnischen Einrichtung (20) mit wenigstens einem Zuluftkanal (22) bzw. einem Abluftkanal während des Ermittelns der Luftströmung der Zuluftkanal (22) bzw. der Abluftkanal geschlossen wird.

9. Verfahren nach einem der Ansprüche 1 bis 8, **dadurch gekennzeichnet, daß** mittels einer Recheneinheit (24) eine Luftwechselrate ermittelt wird.

10. Verfahren nach einem der Ansprüche 1 bis 9, **dadurch gekennzeichnet, daß** mittels der Recheneinheit (24) eine automatische Ermittlung der Dichtheit durchgeführt wird.

**Claims**

1. A method of determining the air tightness of a space (10), particularly a building or parts thereof, with a ventilating device (20), wherein supply air (10) is supplied to the space by means of a ventilator (12) via a supply passage (22) and exhaust air is discharged from the space (10) via an exhaust passage (26), **characterised in that** for the purpose of determining the air tightness, the supply air passage (22) or the exhaust air passage (26) is closed by means of a closure device (28), an air pressure differing from an air pressure of an external atmosphere is produced by means of a ventilator (12) via the open passage (22, 26) and is measured by means of a pressure measuring device (18), the amount of air flowing through the ventilator (12) is determined by means for flow measurement and the air tightness of the space (10) is determined from the amount of air flowing through the ventilator and the measured air pressure.

2. A method as claimed in claim 1, **characterised in that** the amount of air flowing through the ventilator is determined by means of a pre-determinable ventilator characteristic of the ventilator (12).

3. A method as claimed in claim 1 or 2, **characterised in that** the ventilator generates a maximum amount of air flowing through the ventilator in dependence on the ventilator.

4. A method as claimed in any one of claims 1 to 3, **characterised in that** the air pressure is determined in each case under different operating conditions of the ventilator.

5. A method as claimed in claim 4, **characterised in that** the ventilator (12) is switched off at one operating condition.

6. A method as claimed in any one of claims 1 to 5, **characterised in that** the air pressure difference with respect to an external atmosphere surrounding the space (10) is determined.

7. A method as claimed in any one of claims 1 to 6, **characterised in that** a reduced pressure or an over pressure is produced in the space (10) in a range of about 2 to 30Pa preferably in a range of about 3 to 25Pa, particularly in a range of 6 to 20Pa.

8. A method as claimed in any one claims 1 to 7, **characterised in that** with a ventilating device (20), which is connectable to the space (10), with at least one supply air passage (22) and an exhaust air passage, the supply air passage (22) or the exhaust air passage is closed during the determination of the air flow.

9. A method as claimed in any one of claims 1 to 8, **characterised in that** an air change rate is determined by means of a computing unit (24).

10. A method as claimed in any one of claims 1 to 9, **characterised in that** an automatic determination of the air tightness is performed by means of the computing unit (24).

## Revendications

1. Procédé pour déterminer l'étanchéité d'une pièce (10), notamment d'un bâtiment ou de parties d'un bâtiment, avec une installation de ventilation (20), dans lequel, au moyen d'un ventilateur (12), de l'air est soufflé dans la pièce (10) par une gaine d'amenée d'air (22) et l'air vicié est extrait de la pièce (10) par une gaine d'extraction de l'air (26), **caractérisé en ce que**, pour établir l'étanchéité, la gaine d'amenée d'air (22) ou la gaine d'extraction de l'air (26) est fermée au moyen d'un dispositif de fermeture (28), on génère, au moyen du ventilateur (12) par la gaine (22, 26) ouverte, une pression d'air différente de celle d'une atmosphère extérieure et on la mesure au moyen d'un manomètre (18), la quantité d'air qui s'écoule par le ventilateur (12) est déterminée au moyen de débitmètres et d'après la quantité d'air qui s'écoule par le ventilateur et la pression de l'air mesurée, on détermine l'étanchéité de la pièce (10).

2. Procédé selon la revendication 1, **caractérisé en ce que** la quantité d'air qui s'écoule par le ventilateur est déterminée au moyen d'une caractéristique prédéterminée du ventilateur (12).

3. Procédé selon la revendication 1 ou 2, **caractérisé en ce que** le ventilateur produit une quantité d'air maximale s'écoulant par ledit ventilateur qui dépend du ventilateur.

4. Procédé selon l'une des revendications 1 à 3, **caractérisé en ce que** la pression de l'air est déterminée dans chaque cas pour des états de fonctionnement différents du ventilateur (12).

5. Procédé selon la revendication 4, **caractérisé en ce que**, dans un état de fonctionnement, le ventilateur (12) est arrêté.

6. Procédé selon l'une des revendications 1 à 5, **caractérisé en ce qu'**une pression différentielle de l'air est déterminée par rapport à une atmosphère extérieure enveloppant la pièce (10).

7. Procédé selon l'une des revendications 1 à 6, **caractérisé en ce que** l'on crée dans la pièce (10) une dépression ou une surpression dans une plage d'environ 2 à 30 Pa, de préférence dans une plage d'environ 3 à 25 Pa, plus particulièrement dans une plage de 6 à 20 Pa.

8. Procédé selon l'une des revendications 1 à 7, **caractérisé en ce que**, s'agissant d'une installation de ventilation (20) pouvant être reliée à la pièce (10), comportant au moins une gaine d'amenée d'air (22) ou une gaine d'extraction de l'air, ladite gaine d'amenée d'air (22) ou respectivement ladite gaine d'extraction est fermée pendant que la vitesse d'écoulement de l'air est déterminée.

9. Procédé selon l'une des revendications 1 à 8, **caractérisé en ce que** l'on utilise une unité de calcul (24) pour déterminer une vitesse de renouvellement de l'air.

10. Procédé selon l'une des revendications 1 à 9, **caractérisé en ce que** l'unité de calcul (24) procède automatiquement à la détermination de l'étanchéité.

Fig. 1

EP 1 628 087 B1

Klimatisierung Normalbetrieb

Druckmessung im Raum

Luftklappe zu

Ventilator ein für Messung

Unterdruck von 50 Pa einstellen

Druckmessung im Raum

Strömungsmesser auswerten

Meßdaten auswerten

Dichtheit/Luftaustauschrate bestimmen

Ventilator Normalbetrieb

Luftklappe auf

Fig. 3

Klimatisierung Normalbetrieb

Luftklappe zu

Ventilator auf Meßbetrieb

Unterdruck von 35 Pa einstellen

Differenzdruckmessung

Strömungsmesser auswerten

Meßdaten auswerten

Dichtheit/Luftaustauschrate bestimmen

Ventilator Normalbetrieb

Luftklappe auf

Fig. 2

13

Fig. 4

Fig. 5

| Luftwechselzahl n in h⁻¹ | | | |
|---|---|---|---|
| Haus 250 m³ (100 m²) | Haus 375 m³ (150 m²) | Haus 500 m³ (200 m²) | LW bei n10/50 in m³/h |

Fig. 6

gemessenes Δp in Pa

**EP 1 628 087 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5984773 A